Europäisches Patentamt

European Patent Office

Office européen des brevets

(11) Veröffentlichungsnummer: **0 286 573**
**A2**

# (12) EUROPÄISCHE PATENTANMELDUNG

(21) Anmeldenummer: 88710005.5

(22) Anmeldetag: 07.04.88

(51) Int. Cl.⁴: **F 16 K 15/14**

(30) Priorität: 07.04.87 DE 8705153

(43) Veröffentlichungstag der Anmeldung:
12.10.88 Patentblatt 88/41

(84) Benannte Vertragsstaaten:
AT BE CH DE ES FR GB GR IT LI LU NL SE

(71) Anmelder: KEIZERS, Sigrid
Königsbergerstrasse 2-4
D-4280 Borken (DE)

(72) Erfinder: KEIZERS, Sigrid
Königsbergerstrasse 2-4
D-4280 Borken (DE)

(54) Rückschlagventil für verschmutzte flüssige und gasförmige Medien.

(57) Die Erfindung betrifft ein Rückschlagventil für verschmutzte flüssige oder gasförmige Medien, bei dem ein ansonsten nicht bewegliches Dichtelement 4 aus elastischem Material in einem Ventilkörper 1 auf einer kreisringförmigen Fläche unter Vorspannung gegen eine Trennwand 2 mit Durchbrüchen 3 gepreßt wird. Die Stirnseiten des Dichtelementes 4 sind durch die Schraube 5 und Mutter 6 so verformt, daß die entstandene Vertiefung mit der Trennwand 2 eine Hohle bildet.

Figur 1

**Beschreibung**

## Rückschlagventil für verschmutzte flüssige und gasförmige Medien

Rückschlagventile haben im allgemeinen die Aufgabe, die Fließrichtung eines Mediums in einem Rohr oder dergleichen in nur einer Richtung zu ermöglichen. Dadurch soll beispielsweise verhindert werden, daß das geförderte Medium etwa bei plötzlichem Druckabfall in der Rohrleitung zurückfließt und unerwünschte Bestandteile in die falsche Richtung transportiert. Ebenso kann die Aufgabe eines Rückschlagventiles darin bestehen, einem Medium in einem Behälter oder in einer Rohrleitung bei Bedarf flüssige oder gasförmige Zusatzstoffe durch eine weitere Rohrleitung mit höherem Druck zuzuführen. Dabei muß sichergestellt werden, daß z. B. bei einer Unterbrechung der Zuführung, wenn der Druck in der Dosierleitung kleiner ist als der in dem Behälter oder in der Mischleitung, ein Rückfließen des mit den Zusatzstoffen versorgten Mediums verhindert wird. Das bedeutet, daß der Behälter bzw. die Mischleitung gegenüber der Dosierleitung sicher und schnell verschlossen werden muß, wobei in der Regel der innere Druck die notwendige Energie für die Schließung des Rückschlagventils liefert.

Durch den Einbau von Rückschlagventilen kann beispielsweise verhindert werden, daß giftige Gas oder Flüssigkeiten bei unvorhergesehenem Druckverlust nach außen oder in ein Leitungssystem gelangen und unkalkulierbare Gefahren für die Umwelt darstellen. In anderen Fällen kann es von erheblicher wirtschaftlicher Bedeutung sein, den Rückfluß verschmutzter Medien zu verhindern, wenn dadurch unter Umständen kostspielige Geräte und Maschinen zerstört werden könnten.

In der Regel können die geforderten Aufgaben von handelsüblichen Rückschlagventilen mit genügender Sicherheit abgedeckt werden. Dabei wird normalerweise eine mehr oder weniger elastische kreisförmige Scheibe durch den Behälter- oder Rohrleitungsdruck gegen eine kleinere mit erhöhtem Rand versehene Öffnung gepreßt, wobei diese verschlossen wird. Die elasti sche Scheibe kann beispielsweise aus Gummi bestehen. Um zu verhindern, daß sie sich infolge des einwirkenden Druckes verformt und nicht mehr sicher schließt, wird sie druckseitig mit einer weiteren Scheibe aus steifem Material, z. B. Messing, versehen. Dadurch wird gewährleistet, daß das Dichtelement ohne durch- oder aufzubiegen an allen Stellen des Dichtrandes anliegt.

Ein so gestalteter Ventilteller benötigt darüberhinaus eine Führung, die sicherstellt, daß er nur normal zur Schließebene bewegt und nicht seitlich verschoben werden kann. Dies wird beispielsweise dadurch verwirklicht, daß die Messingscheibe einen zentrischen Zapfen besitzt, der in einer Bohrung in Längsrichtung beweglich ist. Auf dem Zapfen zwischen Scheibe und Bohrung wird zusätzlich eine Druck-Schraubenfeder angeordnet, die den Ventilteller gegen den Ventilsitz drückt. So wird erreicht, daß der Ventilteller auch in drucklosem Behälter- oder Rohrleitungszustand sicher auf dem Ventilsitz positioniert wird.

Wird ein solches Rückschlagventil von der Seite der elastischen Scheibe her mit einem Druck und mit einer damit verbundenen Kraft beaufschlagt, die die entgegengesetzt wirkende aus Innendruck und Schraubenfeder resultierende Kraft übersteigt, so hebt der Ventilteller vom Ventilsitz ab und ein flüssiges oder gasförmiges Medium kann das Ventil in Richtung des geringeren Druckes passieren. Bei umgekehrten Kraftverhältnissen wird der Ventilteller gegen den Sitz gepreßt und die Öffnung verschlossen. Auf diese Weise wird gewährleistet, daß ein solches Rückschlagventil nur in einer Richtung durchflossen werden kann.

Derartige Ventile haben einerseits den Nachteil, daß die Herstellung relativ kostenaufwendig ist. Andererseits neigt das Dichtungselement nach einiger Zeit im Bereich der ringförmigen Dichtstelle zur Verhärtung, die zu Undichtheiten führt. Zu weiche Elemente hätten den Nachteil, dem Anpreßdruck zu sehr nachzugeben, so daß die geforderte Dichtheit ebenfalls nicht gewährleistet würde.

Vor allem aber, wenn schmutzhaltige Medien den Ventilsitz passieren, kann es zu Problemen kommen. Verunreinigungen, beispielsweise Sandkörnchen, setzen sich zwischen Dichtrand und Dichtelement und werden unter Umständen in den bereits verhärteten Werkstoff gepreßt. Ebenso kann die Oberfläche des Dichtrandes durch scharfkantige und harte Schmutzteilchen beschädigt werden. In beiden Fällen ist nicht mehr gewährleistet, daß das Ventil absolut dicht schließt.

Aufgabe der vorliegenden Erfindung ist es nun, diese Nachteile zu vermeiden. Dies wird in erster Linie dadurch erreicht, daß ein hochelastsiches Dichtelement verwendet wird, welches großflächig abdichtet und auch dann, wenn sich Schmutzteilchen zwischen Dichtfläche und Dichtelement befinden, noch sicher abdichtet und an der Oberfläche nicht beschädigt wird. Weiterhin reicht die Elastizität des Dichtwerkstoffes aus, die Durchflußöffnungen auch in drucklosem Zustand zu verschließen, ohne daß zusätzliche äußere Kräfte zum Beispiel durch eine Schraubenfeder aufgebracht werden müssen. Dies wird erreicht, indem das Dichtelement verformt und vorgespannt gegen die Durchlaßöffnungen gepreßt wird, so daß es auf Grund der eigenen Elastizität abdichtet.

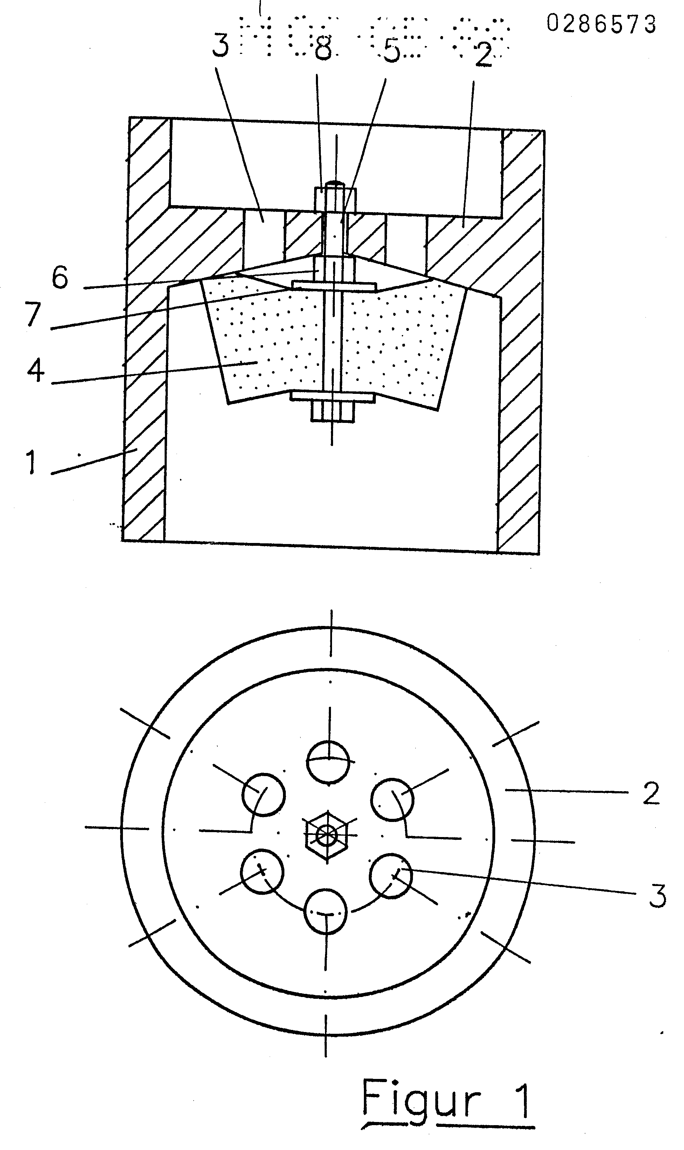

Die erfindungsgemäße Ausführung eines solchen Rückschlagventils ist in Figur 1 im Schnitt und in der Draufsicht dargestellt und wird an Hand dieses Bildes nachstehend erläutert:

Ein in der Regel runder Ventilkörper 1 besitzt quer zur Strömung des durchfließenden Mediums eine Trennwand 2, die mit Durchbrüchen, z. B. Bohrungen 3, versehen ist. Die Trennwand 2 ist auf der einen Seite planeben und auf der anderen Seite zur Mitte hin kegelig abfallend bearbeitet. Auf dieser hohlen Seite befindet sich ein elastisches Dichtelement 4, beispielsweise aus Gummi, deren Durchmesser größer ist als die äußerste Begrenzung der Durchbrüche. In der Mitte des Dichtelementes 4 sitzt eine Schraube 5, mit der das Dichtelement im Zentrum der Durchbrüche gehalten wird. Die Schraube hat weiterhin die Aufgabe, das Dichtelement 4 in der Mitte mittels Mutter 6 und Unterlegscheibe 7 zusammenzudrücken, so daß eine mehr oder weniger nach innen abgesenkte Stirnfläche entsteht.

Die Schraube 5 wird in der mittleren Bohrung der Trennwand 2 mit der Mutter 8 so befestigt, daß keine Bewegung mehr möglich ist, und das Dichtelement 4 vorgespannt gegen die Trennwand 2 gedrückt wird.

Durch die Verformung der Stirnfläche des Dichtelementes 4 wird in Verbindung mit der kegeligen Hohle der Trennwand 2 zwischen diesen beiden im Bereich der Durchbrüche ein Hohlraum geschaffen, und die Dichtwirkung auf eine kreisringförmige Fläche außerhalb der Durchbrüche verlagert.

Wird das Ventil von der Seite der Trennwand 2 her mit einem flüssigen oder gasförmigen Medium unter einem bestimmten Druck beaufschlagt, so kann diese durch die Durchbrüche 3 in der Trennwand 2 hindurchströmen, da das Dichtelement 4 auf Grund ihrer elastischen Eigenschaft am äußeren Rand nachgibt und den Durchfluß mit relativ geringem Widerstand freigibt Vorraussetzung dafür ist, daß der Druck auf der Seite des Dichtelementes 4 geringer ist als auf der Seite der Trennwand 2. Andererseits ist das Dichtelement in der Lage, das Ventil in umgekehrter Richtung dicht zu verschließen, wenn entgegengesetzte Druckverhältnisse herrschen.

Das Ventil schließt auch dann dicht, wenn sich Schmutzpartikel zwischen Dichtelement 4 und Trennwand 2 setzen, da sich das elastische Material ausreichend verformen kann.

Ea hat sich gezeigt, daß das entwickelte Rückschlagventil die gestellten Anforderungen voll erfüllt und vor allem in Hinblick auf Störanfälligkeit sicher arbeitet. Ein Aufbiegen des Dichtelementes 4 am äußeren Rand wird auch in drucklosem Zustand sicher verhindert, da es unter Vorspannung im Ventilkörper befestigt ist.

**Patentansprüche**

1. Rückschlagventil für verschmutzte flüssige oder gasförmige Medien, gekennzeichnet durch einen in der Regel runden Ventilkörper 1 mit einer inneren mit Durchbrüchen 3 versehenen Trennwand 2 und einem auf der Sperrseite angebrachten elastischen Dichtelement 4, welches auf einer kreisringförmigen Fläche außerhalb der Durchbrüche 3 auf der Trennwand 2 aufliegt.

2. Rückschlagventil nach Anspruch 1, dadurch gekennzeichnet, daß die Durchbrüche 3 in der Trennwand 2 konzentrisch um den Mittelpunkt angeordnet sind.

3. Rückschlagventil nach den Ansprüchen 1 und 2, dadurch gekennzeichnet, daß die Trennwand 2 auf der Sperrseite von außen zur Mitte hin kegelig abfällt.

4. Rückschlagventil nach den Ansprüchen 1 bis 3, dadurch gekennzeichnet, daß das Dichtelement 4 mit einer Schraube 5 oder einem anderen Mittel in der Mitte der Trennwand 2 so befestigt ist, daß es im Bereich der kreisringförmigen Abdichtung die Trennwand 2 unter Vorspannung berührt.

5. Rückschlagventil nach den Ansprüchen 1 und 4, dadurch gekennzeichnet, daß die Stirnflächen des Dichtelementes 3 in der Mitte nach innen gewölbt sind, so daß sich zwischen Dichtelement 3 und Trennwand 2 ein Hohlraum bildet.

0286573

Figur 1